Europäisches Patentamt

European Patent Office

Office européen des brevets

(11) Publication number: **0 149 919**
**A2**

(12) # EUROPEAN PATENT APPLICATION

(21) Application number: **84308932.7**

(22) Date of filing: **20.12.84**

(51) Int. Cl.⁴: **C 08 F 291/02**
**C 08 F 279/02**
**//(C08F291/02, 212:12)**

(30) Priority: **30.12.83 US 567057**

(43) Date of publication of application:
**31.07.85 Bulletin 85/31**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Gunesin, Binnur Zeynep**
**27 Old Stirling Road**
**Warren, New Jersey 07060(US)**

(72) Inventor: **Viola, Jeffrey Peter**
**122 Wood Mill Drive**
**Cranbury, New Jersey 08512(US)**

(74) Representative: **West, Alan Harry**
**Mobil Court 3 Clements Inn**
**London WC2A 2EB(GB)**

(54) High impact copolymer and method of forming same.

(57) A high impact copolymer comprising polymeric units of p-methylstyrene grafted onto a rubber backbone is provided with improved stiffness and impact characteristics by the incorporation of a comonomer, such as styrene or methyl methacrylate.

F-2597

-1-

## HIGH IMPACT COPOLYMER AND METHOD OF FORMING SAME

The present invention relates to high impact poly(p-methylstyrene) (HIPPMS) and a method of forming same.

It is well known in the art to produce various shaped articles from polystyrene monomers. These articles, however, suffer from an assortment of defects, such as low resistance to fat-containing foods.

It is also known that polymers containing para- methylstyrene (p-methylstyrene), and especially HIPPMS, overcome the above-mentioned defects and are advantageous in other areas as well. For example, p-methylstyrene monomers are produced from the alkylation and dehydrogenation of toluene and ethylene, whereas styrene is produced from the alkylation and dehydrogenation of benzene and ethylene. Unlike toluene, benzene is known to be a hazardous substance which has been linked to cancer. Further, toluene is presently more commercially economical to use.

Poly(p-methylstyrene) is also less dense and therefore lighter in weight than polystyrene, an economically attractive feature. Further, poly(p-methylstyrene) has superior flow properties at temperatures above 240°C, which results in shorter injection cycles and improved processability of the polymer product. The commercial value of this property is significant, as the fastest flow rate of the molten polymer into a cold mold is preferred.

Poly(p-methylstyrene) polymers also have a higher glass transition temperature (Tg) than polystyrene. Thus, poly(p-methylstyrene) retains its solid state properties at higher temperatures than polystyrene. The Tg of polystyrene is approximately 100-104°C, whereas the Tg of poly(p-methylstyrene) is between 108-110°C. Therefore, unlike polystyrene, a poly(p- methylstyrene) container may, for example, hold boiling water without distortion.

Further, poly(p-methylstyrene) has a higher melt stability than polystyrene. Therefore, under conditions of increasing temperature, polystyrene becomes less viscous than poly(p-methylstyrene). This is due in part to the lower heat stability of polystyrene, which results in faster chain degradation than in poly(p-methylstyrene).

Poly(p-methylstyrene) will not ignite as quickly as polystyrene, thus making it a better flame retardant product. This is primarily because poly(p-methylstyrene) cross-links when degrading, whereas polystyrene splits off, giving up styrene gas, a flame ignition stimulator. However, the formation of a cross-linking network in poly(p-methylstyrene) delays the expulsion of a flammable monomer gas.

Further, unlike polystyrene, poly(p-methylstyrene) is more optically compatible with aliphatic groups, such as polybutadiene, thus imparting a clear product.

High impact copolymers of poly(p-methylstyrene), e.g., HIPPMS, are generally graft copolymers produced by grafting units derived from the polymerizable mixture onto a generally rubbery backbone polymer. Suitable backbone polymers include polybutadiene, poly(dimethylbutadiene), polyisoprene, polychloroprene and other synthetic rubbers, such as styrene- butadiene rubber, ethylene-propylene rubbers, ethylene-propylene- diene elastomers, polyacrylates, nitrile rubbers and copolymers with other aromatic monomers, including vinyltoluene. The backbone generally comprises 2-25% by weight of the high impact copolymer, preferably 3-10% by weight. Normal techniques, e.g., grafting, comparable to those used for making high impact polystyrenes are useful; they are well known in the art and referred to, for example, in U. S. Patent No. 2,694,692 and British Patent No. 1,054,301.

0149919

Although poly(p-methylstyrene) has the above-mentioned advantages over polystyrene, there are some disadvantages to products derived from poly(p-methylstyrene). For example, exposure to aliphatic solvents decreases the solvent resistance of poly(p-methylstyrene). Additionally, exposure to fatty acids and fatty acid esters, e.g., margarine or yogurt and mineral and vegetable oils, decreases the resistance of p-methylstyrene polymers.

It is thus an object of this invention to overcome the above-mentioned defects of the prior art and further to produce a high impact copolymer with increased stiffness and impact characteristics.

Accordingly, the invention resides in one aspect in a high impact copolymer, comprising a rubbery backbone polymer chain and polymeric units grafted on said chain, said polymeric units being formed from a polymerizable mixture comprising p-methylstyrene and a comonomer which serves to stiffen and increase the impact strength of said high impact copolymer.

In a further aspect, the invention resides in a method of forming a high impact copolymer, comprising a rubbery backbone polymer chain and polymeric units grafted on said chain, said polymeric units being formed from a polymerizable mixture comprising p-methylstyrene and a comonomer which serves to stiffen and increase the impact strength of said high impact copolymer, comprising the following steps:

(a) dissolving said rubber and said polymerizable mixture in a solvent;

(b) polymerizing and grafting said polymeric units onto said rubber in the presence of heat;

(c) separating the product of step (b) into a solid and a liquid fraction; and

(d) removing said liquid fraction from said solid fraction.

An essential monomer component for preparing the instant high impact copolymer is p-methylstyrene which may be provided in the form of a mixture of methylstyrene isomers rich in p-methylstyrene. Such a mixture may contain at least 90 weight percent, preferably 95 weight percent, more preferably 97 or greater weight percent p-methylstyrene and less than 0.1 weight percent o-methylstyrene, with the balance being m-methylstyrene. A typical mixture contains, by weight, about 97 percent p-methylstyrene, about 3 percent m-methylstyrene, and about 0.05 percent o-methylstyrene. The mixtures are obtained by catalytic dehydrogenation of the mixtures of ethylmethyl benzene isomers described in U. S. Patent No. 4,086,287. Homopolymers and copolymers can be prepared from p-methylstyrene in known manner utilizing methods analogous to those long used for the preparation of polystyrene and styrene copolymers. The preparation of p-methylstyrene polymers and random copolymers of styrene and p-methylstyrene is described in U. S. Patent No. 4,306,049.

The required high impact copolymer is prepared by polymerizing the p-methylstyrene with a comonomer, i.e., styrene or methyl methacrylate, in the presence of a diene or saturated type rubber. Preferred examples of the rubber are poly(butadiene) having a 7% 1,2; 35-55% cis; and 35-50% trans microstructure, poly(isoprene), high cis-(1,4) polybutadiene having a 98% cis, 2% 1,2 microstructure, ethylene propylene diene terpolymer (EPDM), and butyl rubber.

The comonomer which serves to stiffen and increase the impact strength of the high impact copolymer is preferably styrene or methyl methacrylate.

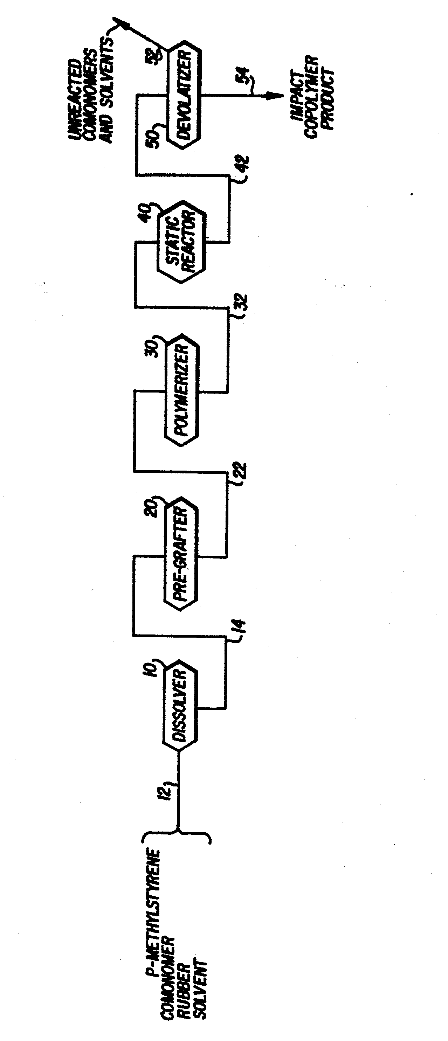

The accompanying drawing is a schematic representation of a method forming a high impact copolymer according to one example of the present invention.

Referring to the drawing, a 50/50 reaction mixture of p-methylstyrene and a second comonomer (styrene or methyl methacrylate), rubber, and 10% solvent (v/v) is charged into dissolver 10 via line 12. Suitable solvents are those which dissolve the rubber in the p-methylstyrene/ second comonomer mixture, examples of such solvents being paraethyltoluene (PET) and ethylbenzene. The mixture is allowed to dissolve in dissolver 10 for 1 to 4 hours until a clear solution is formed. At this point, the mixture leaves dissolver 10

F-2597

via line 14 and is charged to pregrafter 20. Pregrafter 20 gently agitates the mixture at temperatures of between 100 and 130°C, and preferably 118°C. Alternatively, a peroxide catalyst may be incorporated into the blend in order to reduce the blend temperature to 90°C. Examples of suitable peroxide catalysts include benzoyl peroxide, acetyl peroxide, t-butyl peroxyisobutyrate, p-chlorobenzoyl peroxide, 2,5-dimethyl-2,5 bis(2-ethyl hexanoylperoxy)hexane, and t-butyl peroctoate. In pregrafter 20, the copolymers will start to polymerize and chemically attach, i.e., graft, to the rubber until approximately 20% by weight of the mixture is formed into a suspension of a rubber grafted copolymer.

The mixture is then removed from pregrafter 20 via line 22 and is charged to polymerizer 30 for further polymerization. Polymerizer 30 continues the process initiated in pregrafter 20 at a higher temperature, i.e., 115-135°C and preferably 132°C. The temperature is increased because of the increased viscosity of the rubber-grafted polymer solution from pregrafter 20. The solution is allowed to react in polymerizer 30 until approximately 45-50% of the mixture forms a rubber grafted copolymer mixture.

At this point, the mixture is removed from polymerizer 30 via line 32 and enters static reactor 40. Because static reactor 40 essentially finishes the polymerization of the mixture, the reactor preferably operates at higher temperatures than either pregrafter 20 or polymerizer 30. The mixture is allowed to gently agitate in static reactor 40 at a temperature of 130-170°C, and preferably 155°C, until 70-75% of the solution is converted to a solid rubber grafted copolymer. The other 25-30% of the solution comprises the remaining solvent and any unreacted comonomers.

When a 75-80% solid level is reached in static reactor 40, the mixture is removed from static reactor 40 via line 42 and enters devolatilizer 50. Devolatilizer 50 acts to remove the solvent and any unreacted comonomer from the rubber grafted polymer. Devolatilizer 50 operates under temperature conditions of 200-220°C, and preferably 210°C, and a pressure of 15-20 mmHg. The unreacted comonomer and solvents are removed via line 52. The solvents and comonomers may then be further processed into additional cycles of the high impact copolymer formation. The high impact copolymer is hydrostatically removed from devolatizer 50 via line 54 and allowed to cool at ambient temperature. The cooled high impact copolymer is then pelletized.

At this point, the composition of the high impact copolymer pellet has a range of 25 to 75 weight % of p-methylstyrene comonomer, 25 to 75 weight % second comonomer, and 7.5 to 11 weight % rubber. The combination of p-methylstyrene comonomer and the second comonomer ranges from 89 to 92.5 weight %. Preferably, the composition of the high impact copolymer is as follows: 46 weight % p-methylstyrene, 44 weight % comonomer and 10 weight % rubber.

The high impact copolymer produced from p-methylstyrene and the second comonomer has a higher impact strength than HIPPMS as shown by their Izod impacts. A typical comparison of the properties is given in Table 1 below. The samples shown are HIPPMS without a second copolymer and HIPPMS with polystyrene in a 50/50 mixture, both samples being injection molded under the following conditions:

| | |
|---|---|
| Barrel Temperature | 400°F (204°C) |
| Mold Temperature | 150°F ( 66°C) |
| Initial Injection Pressure | 600 psi (4140 kPa) |

Table 1 shows tested values of the samples produced at 18-second and 5-second injection rates.

TABLE 1

| | HIPPMS | | HI(PMS-co-STYRENE) | |
|---|---|---|---|---|
| | 18 sec | 5 sec | 18 sec | 5 sec |
| Izod Notched 1/8" (0.3 cm) Impact | 2.45 | 1.86 | 2.55 | 1.95 |
| Tensile Strength (psi) (x $10^3$ kPa) | 3,930 (27.1) | 3,980 (27.4) | 4,140 (28.5) | 4,760 (32.8) |
| Tensile Modulus (psi) (x $10^3$ kPa) | 206,000 (1420) | 218,000 (1503) | 227,000 (1565) | 246,000 (1696) |
| Yield Strength (psi) (x $10^3$ kPa) | 4,210 (29.0) | 3,800 (26.2) | 4,400 (30.3) | 4,430 (30.5) |
| Elongation (%) | 18.2 | 14.5 | 10.9 | 12.4 |

The 18-second injection rate increases the area-to-volume ratio of rubber in HIPPMS, thus resulting in a tougher polymer with a higher impact resistance than the polymer injected at a 5-second rate. However, the 5-second injection rate gives an indication of the commercial value of the polymer because the standard industrial injection rate for polymers in this category is closer to 5 seconds.

As can be seen from Table 1, the impact strength of HI(PMS-co-styrene) increases by 4% (at 18-second injection rate) and 5% (at 5-second injection rate) over HIPPMS. Additionally, the stiffness of HI(PMS-co-styrene), as measured by tensile modulus, increases by 9.2% (at the 18-second injection rate) and 11% (at the 5-second injection rate) over HIPPMS. Further, tensile strength and yield strength show increases of approximately 5% (at 18-second injection rate and 15% (at 5-second injection rate) in HI(PMS-co-styrene).

It is believed that the increased impact strength and stiffness in the HI(PMS-co-styrene) polymer are due to the lower rubber level in the final product.

Additionally, the grafting efficiency of HI(PMS-co-styrene) polymer is greater than HIPPMS alone. A comparison of these properties is given in Table 2 below.

TABLE 2

|  | HIPPMS | HI(PMS-co-STYRENE) |
|---|---|---|
| Rubber Level (%) | 12.8 | 10.9 |
| Grafting Efficiency (%) | 16.4 | 19.8 |

The higher grafting efficiency of the HI(PMS-co- styrene) polymer is beneficial from a commercial point of view. Resulting polymers have a higher melt temperature stability, increased stiffness, and yield strength over HIPPMS.

The invention will now be more particularly described with reference to following Examples, in which all proportions and percentages are given by weight.

## COMPARATIVE EXAMPLE

### Preparation of HIPPMS Polymer as Control

The mixture of HIPPMS had the following composition:

| Product | Percentage |
|---|---|
| P-methystyrene | 82 |
| PET Solvent | 10 |
| Rubber (Diene 55-Firestone) | 7.8 |

To this mixture was added 800 ppm Irganox 1076 as an antioxidant and 2400 ppm Polygard HR as a stabilizer. The mixture was dissolved at room temperature, continuously charged to the pregrafter reactor at a feed rate of 21 g/min, and agitated at 200 rpm at a temperature of 118°C with a residence time of 3.4 hours. The resultant product contained 26% solids. The product was then continuously charged to the polymerization reactor and agitated at 150 rpm at a temperature of 131°C with a residence time of 3.5 hours. The resultant polymerization product had 46% solids. The polymerization product was then agitated at 15 rpm at 150°C for 3.4 hours, and devolatilized at a temperature of 210°C and a pressure of 15-20 mmHg. The solvent and unreacted monomer were removed from the molten polymer product which was hydrostatically removed from the devolatilizer and allowed to cool at ambient temperature.

The properties of the final polymer were as shown in Table I:

## EXAMPLE 2

### Preparation of High Impact Copolymer With a
### 50/50 Mixture of P-methylstyrene and Styrene

The high impact copolymer mixture was prepared in the same way as in Example 1, with the following exception: instead of incorporating 82% of p-methylstyrene, Example 2 incorporated 82% of a 50/50 mixture of p-methylstyrene and styrene. The properties of the polymer thus produced were as shown in Table I.

## EXAMPLE 3

### Preparation of High Impact Copolymer With
### a 50/50 Mixture of p-methylstyrene and Methyl Methacrylate

The high impact copolymer mixture was prepared in the same way as in Example 1, with the following exception: instead of incorporating 82% of p-methylstyrene, Example 3 incorporated 82% of a 50/50 mixture of p-methylstyrene and methyl methacrylate.

The properties of the polymer thus produced were as follows:

| Product | Number | |
|---|---|---|
| Izod Impact | 2.4 | |
| Yield Strength (psi) ($\times 10^3$ kPa) | 4,600 | (31.7) |
| Tensile Modulus (psi) ($\times 10^3$ kPa) | 260,000 | (1793) |
| Tensile Strength (psi) ($\times 10^3$ kPa) | 4,820 | (33.2) |
| Elongation (%) | 15.6 | |

0149919.

F-2597

-10-

<u>CLAIMS</u>

1. A high impact copolymer, comprising a rubbery backbone polymer chain and polymeric units grafted on said chain, said polymeric units being formed from a polymerizable mixture comprising p-methylstyrene and a comonomer which serves to stiffen and increase the impact strength of said high impact copolymer.

2. A high impact copolymer according to Claim 1, wherein the amount of said polymeric units ranges from 89 to 92.5 % by weight of the copolymer.

3. A high impact copolymer according to Claim 1 or Claim 2, wherein the amount of said comonomer in said mixture ranges from 25 to 75 weight %.

4. A high impact copolymer according to any preceding Claim, wherein the amount of said rubber in said high impact copolymer ranges from 7.5 to 11 weight %.

5. A high impact copolymer according to any preceding Claim, wherein said rubber is selected from ethylene propylene, butyl rubber, polybutadiene, polydimethyl butadiene; polyisoprene, polychloroprene, styrene-butadiene rubber, polyacrylates, and nitrile rubbers.

6. A high impact copolymer according to any preceding Claim, wherein said comonomer is selected from styrene and methyl methacrylate.

F-2597

-11-

7.   A high impact copolymer according to any preceding Claim, said copolymer comprising by weight:

(a)   about 46% p-methylstyrene;

(b)   about 10% rubber; and

(c)   about 44% comonomer.

8.   A method for forming a high impact copolymer, as claimed in claim 1, comprising the following steps:

(a)   dissolving said rubber and said polymerizable mixture in a solvent;

(b)   polymerizing and grafting said polymeric units onto said rubber in the presence of heat;

(c)   separating the product of step (b) into a solid and a liquid fraction; and

(e)   removing said liquid fraction from said solid fraction.

9.   A method according to claim 8 wherein step (b) is conducted in a series of stages at gradually increasing temperature.

10.   A method according to claim 9 wherein said series of stages include

(1)   a first stage conducted at 100-130°C,

(2)   a second stage conducted at 115-135°C, and

(3)   a third stage conducted at 130-170°C.

2784n/0297H

P-METHYLSTYRENE
COMONOMER
RUBBER
SOLVENT

12

DISSOLVER 10

14

PRE-GRAFTER 20

22

POLYMERIZER 30

32

STATIC REACTOR 40

42

DEVOLATIZER 50

52

UNREACTED COMONOMERS AND SOLVENTS

54

IMPACT COPOLYMER PRODUCT

1/1

0149919